(19) Europäisches Patentamt
European Patent Office
Office européen des brevets

(11) EP 1 538 739 B1

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(51) Int Cl.:
***H02P 9/06*** *(2006.01)* ***F16H 47/08*** *(2006.01)*

(21) Anmeldenummer: **04025253.8**

(22) Anmeldetag: **23.10.2004**

(54) **Antriebsstrang für eine Strömungskraftmaschine**

Driveline for a flow converting machine

Ligne d'entraînement pour une machine de conversion de flux

(84) Benannte Vertragsstaaten:
**DE DK ES**

(30) Priorität: **05.12.2003 DE 10357292**

(43) Veröffentlichungstag der Anmeldung:
**08.06.2005 Patentblatt 2005/23**

(73) Patentinhaber: **Voith Turbo GmbH**
**89522 Heidenheim (DE)**

(72) Erfinder: **Basteck, Andreas, Dr.**
**79540 Lörrach (DE)**

(74) Vertreter: **Dr. Weitzel & Partner**
**Patentanwälte**
**Friedenstrasse 10**
**89522 Heidenheim (DE)**

(56) Entgegenhaltungen:
**WO-A-81/01444**
**GB-A- 581 741**
**US-A- 2 946 194**
**US-A- 4 351 152**

EP 1 538 739 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft einen Antriebsstrang, der von einer Strömungskraftmaschine, wie einer Wind- oder Wasserkraftmaschine, Leistung aufnimmt und an einen elektrischen Generator überträgt und eine Drehzahlführung, eine Kraftstoßreduktion sowie eine Kurzzeitenergiespeicherung aufweist.

Strömungsmaschinen, die natürliche Ressourcen wie Wind- und Wasserkraft zum Antrieb eines elektrischen Generators ausnutzen, stellen besondere Anforderungen an einen Antriebsstrang zur Leistungsübertragung. An der Eingangswelle des Antriebsstrangs steht typischerweise im zeitlichen Verlauf ein stark schwankender Leistungseintrag zur Verfügung. Zusätzlich muss die besondere Problematik der Charakteristik und Dynamik bei der mechanischen Energiewandlung der kinetischen Energie des Strömungsmediums in die kinetische Energie des Leistungsaufnehmers, wie eines Windkraftmotors oder einer Wasserkraftturbine, beachtet werden. Somit liegt auf der Eingangswelle eines Antriebsstrangs für Strömungskraftmaschinen eine System inhärente Charakteristik für die Leistungskonvertierung vor, die einer bestimmten Strömungsgeschwindigkeit des vorliegenden Mediums (z. B. Luft und Wasser) ein optimales Drehzahl-/Drehmomentenverhältnis entsprechend der Schnelllaufzahl für die Leistungsaufnahme zuordnet, welches wiederum von der Geometrie und der Gestaltung des Leistungsaufnehmers abhängt.

Wird mittels des Antriebsstrangs ein elektrischer Generator angetrieben, der elektrische Energie in ein elektrisches Verbundnetz einspeist, ist zu beachten, dass die Netzfrequenz vorwiegend einen konstanten Wert aufweist. Schwankungen der Netzfrequenz liegen nur in sehr geringem Ausmaß vor, da diese Größe direkt aus dem Netz selbst herangezogen wird.

Die voranstehend beschriebenen Anforderungen an einen Antriebsstrang sind insbesondere bei Windkraftanlagen gegeben. Hier wird eine variable Eingangsleistung von der Windkraftmaschine aufgenommen, zusätzlich muss der Windkraftrotor eine bestimmte, von der Windgeschwindigkeit abhängige Drehzahl aufweisen, um optimal mechanische Energie aus dem Luftstrom entziehen zu können. Im Folgenden wird daher anhand des Beispiels einer Windkraftanlage die Problematik eines Drehzahl geführten Antriebsstrangs mit Kraftstoßreduktion und Kurzzeitenergiespeicherung dargestellt. Eine Windkraftanlege, die die Problematik der Kurzzeitenergiespeicherung anspricht, ist aus Dokument WO-A-81/01444 bekannt.

Werden die Anforderungen an einen Antriebsstrang einer Windkraftanlage zunächst von der Generatorseite aus betrachtet, so besteht zur Ankoppelung eines elektrischen Generators an das Netz eine erste Lösung darin, den gesamten Antriebsstrang und damit auch den Windkraftrotor drehzahlstarr auszubilden. Solche drehzahlstarren Windkraftanlagen können bei der Verwendung von asynchronen Generatoren als elektrische Maschinen aufgrund des Prinzipien bedingten Schlupfes auf einfache Art und Weise auf ein elektrisches Verbundnetz aufgeschaltet werden. Hierbei wird die Drehzahlkonstanz auf dem Antriebsstrang durch das Getriebe auf den Windrotor übertragen, so dass der Windrotor bei verschiedenen Windgeschwindigkeiten nicht in seinem Leistungsoptimum fährt. Besonders nachteilig an drehzahlstarren Windkraftanlagen ist, dass sie insbesondere bei Teillast, welche bei typischen Windverhältnissen häufig auftritt, nur mit verminderter Effizienz betrieben werden können.

Wird eine Windkraftanlage im Allgemeinen und insbesondere im Teillastbereich drehzahlvariabel betrieben, so besteht entweder die Möglichkeit einen Antriebsstrang mit variabler oder konstanter Ausgangsdrehzahl auszubilden. Dabei ist in beiden Fällen die Ausgangsleistung aufgrund des zeitlich variierenden Momentes ebenfalls zeitlich veränderlich.

Der erste Fall führt bei Windkraftanlagen zur Verwendung von Frequenzumrichtern, die den Generator mit der erforderlichen Frequenz anregen bzw. Kompensationen zur Differenz der bestehenden Netzfrequenz aufbringen und somit einen drehzahlvariablen Generator verwirklichen. Dieser Ansatz leitet aber weg von der hier dargestellten Aufgabe und ist insbesondere mit Schwierigkeiten behaftet, wie der Komplexität der Regelungs- und Steuerkreise, der schlecht abbildbaren parabolischen Charakteristik des Windrotors im Frequenzumrichter, der Steifigkeit der definierten Generatorkennlinie durch den Frequenzumrichter, der geringeren Betriebszuverlässigkeit bei hohen Umweltauflagen, einer mit hohem Aufwand zu betreibende Netzeinspeisequalität, wie z. B. geringe Oberschwingungsbelastung, und der Erzeugung von Blindleistung.

Der zweite Ansatz, nämlich eine variable Rotordrehzahl der Windkraftanlage mit einer konstanten Generatordrehzahl ohne Frequenzumrichter zu verbinden, entspricht der hier dargestellten Thematik eines Antriebsstrangs zum Übertragen einer variablen Leistung mit einer variablen Eingangsdrehzahl und konstanter Ausgangsdrehzahl. Die bekannten Lösungen dieser Problematik, insbesondere für Windkraftanlagen, setzen im Antriebsstrang ein Überlagerungsgetriebe ein, welches zur Verzweigung der mechanischen Leistung verwendet wird. Bei drehzahlvariablen Windkraftanlagen sind nun zwei hierauf basierende Ansätze bekannt geworden, welche zur Konstanthaltung der Generatorfrequenz verwendet werden.

Im ersten System wird die Eingangsleistung über das Überlagerungsgetriebe auf einen großen Generator sowie einen kleinen Stellmotor aufgeteilt, wobei üblicherweise auf den Stellmotor in etwa 30 % der Eingangsleistung übertragen wird. Der Generator ist frequenzstarr mit dem Stromnetz verbunden, während der Stellmotor über einen Frequenzumrichter am Netz angeschlossen ist, oder durch einen Hilfsgenerator, der am Generator mechanische gekoppelt ist, gespeist wird. Zur Stabilisierung der Generatordrehzahl wird der Stellmotor entweder als Motor oder als Generator mit unterschiedlichen Frequenzen betrieben. In einem solchem System liegt die gleiche Problematik wie bei den frequenzgeregelten Generatoren vor.

Im zweiten System, welches hydrostatisch arbeitet, werden anstatt des elektrischen Stellmotors hydraulische Motoren und Pumpen verwendet. Auch hier tritt die Problematik einer schwierigen Regelungscharakteristik auf, insbesondere ein träges Ansprechverhalten und relevante Todzeiten sowie starke Nichtlinearitäten. Außerdem sind die hydraulischen Systemkomponenten aufgrund des konstruktiven Aufwands nachteilig.

Zusätzlich zu den voranstehend beschriebenen Anforderungen an einen Antriebsstrang für Strömungsmaschinen zur Kopplung an einen elektrischen Generator tritt insbesondere für Windkraftanlagen die Besonderheit auf, dass die Rotorblattspitzen eine bestimmte Geschwindigkeit nicht überschreiten sollen, um eine als störend empfundene Geräuschentwicklung auf ein definiertes Niveau zu reduzieren. Abhängig vom Durchmesser der Windkraftrotoren ist es deshalb notwendig, deren Drehzahl auf einen bestimmten maximalen Bereich zu begrenzen bzw. oberhalb einer bestimmten Drehzahlschwelle in Abhängigkeit von der Windlast einen Drehzahlverlauf vorzugeben, welcher möglichst einen bestimmten Maximalwert nicht überschreitet, der jedoch je nach Standort, etwa einem Onshoreoder einem Offshorestandort, variieren kann. Zur Erfüllung dieser Vorgabe kann ein Frequenzumrichter des Generators verwendet werden, der die erforderliche Drehzahl durch seine Frequenz auf den Generator einprägt und damit die Drehzahl des Windkraftrotors begrenzt. Dies erfordert jedoch die voranstehend geschilderte Lösung mit all ihren Nachteilen.

Bei der Verwendung von Frequenzumrichtern ergibt sich die Möglichkeit, dass bei einer im Wesentlichen konstant gehaltenen Drehzahl des Windkraftrotors über die Variation des vom Antriebsstrang übertragenen Drehmoments auch eine variable, von der zur Verfügung stehen kinetischen Energie der Luftströmung abhängige Leistung auf den Generator übertragen werden kann. Nachteilig ist jedoch, dass aufgrund der eingesetzten Umrichtertechnologie bisher nur eine starre Drehzahlführung entlang einer vorgegebenen Sollkurve realisiert wird und so insbesondere auf kurzzeitige Fluktuationen in der Windströmung nicht reagiert werden kann. Als Folge können durch Windböen eingebrachte Laststöße nicht durch eine kurzzeitige Drehzahlveränderung kompensiert werden und wirken folglich direkt auf den Generator und die mechanischen Strukturen. Dies ist insbesondere im Hinblick auf die Lastkollektive und den damit verbundenen Standzeit der Windkraftanlage als nachteilig anzusehen.

Der Erfindung liegt die Aufgabe zugrunde, einen Antriebsstrang für Strömungsmaschinen und insbesondere Wind- und Wasserkraftmaschinen anzugeben, der eine Drehzahlführung erlaubt. Hierbei soll zum einen die Antriebsdrehzahl des Antriebsstrangs zum Antrieb eines elektrischen Generators durch das prägende Netz konstant bleiben und zum anderen die Drehzahl auf der Eingangswelle auf einen bestimmten, vom eingetragenen Moment abhängigen Sollverlauf oder auf einen konstanten Wert begrenzt werden. Insbesondere im Betriebszustand der Volllast, bei der die eingangsseitige Drehzahl des Antriebsstrangs begrenzt ist, soll sich der Antriebsstrang durch eine hinreichende Weichheit in der Reaktion bzw. die Fähigkeit zu einer kurzzeitigen Energiespeicherung bei Überlast auszeichnen, mit der es möglich ist, insbesondere die Einwirkung kurzzeitiger Leistungsschwankungen auf dem Eingang des Antriebsstrangs abzufedern und auch zu verwerten.

Zur Lösung dieser Aufgabe hat der Erfinder zunächst erkannt, dass ein den Anforderungen entsprechender Antriebsstrang aus einer Kombination eines Leistungsverzweigungsgetriebes mit einem hydrodynamischen Stellwandler aufgebaut sein muss.

Die Eingangswelle des Leistungsverzweigungsgetriebes ist hierbei wenigstens mittelbar mit einem Leistungsaufnehmer einer Strömungsmaschine verbunden, für eine Windkraftanlage ist dies beispielsweise der Windkraftrotor, für eine Wasserkraftmaschine entsprechend die Wasserturbine. Als mögliche Zwischenglieder zwischen dem Leistungsaufnehmer und dem Eingang des Leistungsverzweigungsgetriebes können beispielsweise Übersetzungsgetriebe angewandt werden, auch eine starre Kopplung ist möglich.

Im Leistungsverzweigungsgetriebe, das beispielsweise als Planetenumlaufgetriebe mit variablem Übersetzungsverhältnis ausgebildet sein kann, sind zwei Leistungszweige aufgebaut. Im ersten Leistungszweig wird die Ausgangswelle des Antriebsstrangs mit einer mechanischen Leistung durch den Windrotor angetrieben, wobei diese Ausgangswelle wenigstens mittelbar mit dem elektrischen Generator gekoppelt ist. Hierbei ist es notwendig, dass die Ausgangswelle für den Generatorantrieb mit einer konstanten Drehzahl umläuft. Um dies zu erreichen, wird ein hydrodynamischer Wandler mit dessen Pumpenrad von der Ausgangswelle des Antriebsstrangs wenigstens mittelbar angetrieben, wobei eine direkte Koppelung zwischen Ausgangswelle und Pumpenrad besteht. Dies setzt voraus, dass die Ausgangswelle mittels einer Übersetzung im Leistungsverzweigungsgetriebe mit einer im Vergleich zur Drehzahl der Eingangswelle deutlich höheren Drehzahl beschickt wird. Eine typische Drehzahl des elektrischen Generators ist beispielsweise 1500 U/min. Mit derart hohen Drehzahlen auf der Ausgangswelle ist wiederum ein effektiver Betrieb des hydrodynamischen Stellwandlers möglich.

Beim Anlaufen der Windkraftanlage beschleunigt zunächst die Eingangswelle und die Ausgangswelle des Antriebsstrangs bis der mit der Ausgangswelle verbundene elektrische Generator seine Solldrehzahl erreicht und eine Synchronisation mit dem elektrischen Netz, an das der Generator gekoppelt ist, bewirkt werden kann. Im dann erreichten Normalbetrieb prägt die Netzfrequenz dem elektrischen Generator und damit der Ausgangswelle des Antriebsstrangs die vorgesehene Solldrehzahl auf.

In Abhängigkeit von der Stellung eines Reaktionsglieds des hydrodynamischen Stellwandlers, typischerweise eines Leitrads mit Leitschaufeln, findet ein spezifische Leistungsaufnahme der Pumpe und der damit verbundenen Leistungsübertrag zum Turbinenrad des hydrodynamischen Stellwandlers statt. Dies hat zur Folge, dass aufgrund der System inhärenten Charakteristik der Energiekonversion aus einer Luftströmung in die kinetische Energie eines Windkraftrotors und der Systemcharakteristik des Stellwandlers die Übersetzungsverhältnisse im Leistungsverzweigungsgetriebe und das Reaktionsglied des hydrodynamischen Wandlers so eingestellt werden können, dass mittels eines systeminhärenten Regelungseffekts des Stellwandlers im Verbund mit dem Überlagerungsgetriebe im Allgemeinen sowie im Besonderen im Teillastbereich der Windkraftturbine eine optimale Eingangsdrehzahl für den Windkraftrotor auf der Eingangswelle mit der eingeprägten konstanten Generatordrehzahl auf der Ausgangswelle des Antriebsstrangs erreicht werden kann. Das beinhaltet, dass Windrotor und Stellwandler als Strömungsmaschinen die gleiche Charakteristik von Drehzahl/Leistung und Drehzahl/Moment aufweisen und aufgrund ihres übereinstimmenden Systemverhaltens für die Regelung identische Verhaltensweisen erforderlich sind.

Für das Erreichen einer Drehzahlbegrenzung auf der Eingangswelle des Antriebsstrangs wird nun in einem weiteren Schritt die Wandlereinstellung mittels des Reaktionsglieds so vorgenommen, dass sich ein verändertes Drehzahl-Drehmomentverhältnis am hydrodynamischen Stellwandler einstellt und somit auch ein neues Übersetzungsverhältnis im Leistungsverzweigungsgetriebe resultiert, was wiederum dazu führt, dass sich auch auf der Eingangswelle des erfindungsgemäßen Antriebsstrangs und damit für den Windkraftrotor ein bestimmtes Drehzahl-Drehmomentverhältnis einstellt. Nach diesem erfindungsgemäßen Verfahren wird durch eine gezielte Verschiebung der parabolischen Charakteristik und somit einer "Dejustage" des hydrodynamischen Stellwandlers im Antriebsstrang ein solchermaßen überhöhtes Gegenmoment für den Windkraftrotor aufgebaut, dass dieser zwar nicht mehr die optimale Leistung der Luftströmung entnehmen kann, jedoch eine bestimmte, ausgewählte Drehzahl annimmt.

Mit diesem Verfahren gelingt es, die Umlaufgeschwindigkeit des Windkraftrotors unterhalb einer für die Geräuschentwicklung kritischen Schwelldrehzahlbereich zu halten. Alternativ kann auch beim Überschreiten einer gewissen Drehzahl des Windkraftrotors eine bestimmte Drehzahlgrenzkurve eingestellt werden, welche ausschließlich vom am Windkraftrotor angreifenden Moment durch die Luftströmung abhängt. Ein solcher eingeprägter Drehzahlverlauf am Windkraftrotor kann beispielsweise ausgesprochen steil, quasi konstant, gewählt werden, gleichwohl ist es auch möglich, mit zunehmenden Windkräften eine gewisse Erhöhung der Drehzahl zuzulassen, was die System inhärente Weichheit des erfindungsgemäßen Antriebsstrangs noch zusätzlich unterstützt.

Der Antriebsstrang mit Leistungsverzweigungsgetriebe und hydrodynamischen Stellwandler mit Abgriff auf der Ausgangswelle und Leistungsrückfluss auf das Leistungsverzweigungsgetriebe wird durch die Abstimmung der mechanischen Getriebekomponenten so ausgelegt, dass die optimale Aufnahmecharakteristik des Windrotors, die angenähert einen parabolischen Verlauf aufweist, durch den Antriebsstrang abgebildet wird. Für einen solchermaßen angepassten Antriebsstrang kann für eine im Wesentlichen gleichbleibende Einstellung des Reaktionsglieds des hydrodynamischen Wandlers eine variable Leistungsaufnahme, die Führung des Windrotors entlang der optimalen Drehzahl zur Leistungsaufnahme sowie eine konstante Generatordrehzahl erreicht werden. Dieser Effekt, der zu einer lediglich von der Auslegung abhängigen Selbstregelung der Ausgangsdrehzahl des Antriebsstrangs führt, erklärt sich so, dass der hydrodynamische Wandler, der Leistung auf das Leistungsverzweigungsgetriebe zurückfließen lässt, ebenfalls eine parabolische Charakteristik aufweist. Wird nun der hydrodynamische Stellwandler durch die Verstellung des Reaktionsgliedes dejustiert, so wird das Übertragungsverhalten des Antriebsstrangs auf eine neue Drehzahl-Drehmomentenkennlinie verschoben, die dann wiederum in Abhängigkeit der Luftströmungsgeschwindigkeit durchlaufen werden kann und gleichfalls eine parabolische Charakteristik aufweist.

Zur Einstellung einer bestimmten Drehzahl des Windkraftrotors, beispielsweise einer konstanten Drehzahl oberhalb einer festgelegten Drehzahlschwelle, muss eine bestimmte Justage durch das Reaktionselement des hydrodynamischen Stellwandlers und folglich ein bestimmter neuer Arbeitspunkt gewählt werden. Aufgrund dieses Vorgehens ergibt sich der Vorteil, dass jeder gewählter Arbeitspunkt auf einer angenähert parabolischen Kennfeldkurve liegt, so dass für kurzzeitige Fluktuationen im Leistungseintrag, wie sie beispielsweise durch Böen ausgelöst werden können, die voranstehend beschriebene Selbstregelungscharakteristik des Antriebsstrangs jeweils um den gewählten Arbeitspunkt greift. Dies führt zum einen zu einer Abdämpfung von Stößen bei Böen auf den elektrischen Generator und die gesamte Mechanik des Antriebsstrangs. Zum anderen kann durch eine Windböe in einem gewissen Umfang die Eingangsdrehzahl des Antriebsstrangs beschleunigt werden, somit erfolgt für die Beschleunigung des Windrotors und des Antriebsstrangs eine Leistungsaufnahme, die zur Reduzierung einer Momentanerhöhung im Antriebsstrang führt und den kurzzeitigen Schwankungsbereich der Energieerzeugung im elektrischen Generator reduziert, wobei der Antriebsstrang bezüglich seiner Eingangsdrehzahl nach dem Abflauen der Böe aufgrund der Selbstregelcharakteristik wieder zum gewählten Arbeitspunkt zurückkehrt und die vorliegende zusätzliche kinetische Energie vom Windrotor und Antriebsstrang zum Generator abgibt.

Nachfolgend wird das erfindungsgemäße Verfahren anhand von Figuren genauer beschrieben. Darin ist im Einzelnen Folgendes dargestellt:

| | |
|---|---|
| Figur 1 | ist eine schematische Darstellung einer erfindungsgemäßen leistungsverzweigten Windkraftanlage mit einem Stellwandler auf der Abtriebsseite. |
| Figur 2 | zeigt schematisch den Wirkleistungsverlauf im Bestpunkt einer Windkraftanlage. |
| Figur 3 | stellt die Leistungsflüsse und Drehzahlen der einzelnen Zweige des mechanisch-hydrodynamischen Antriebsstrangs in Abhängigkeit der Windturbinendrehzahl dar. |
| Figur 4 | stellt die Leistungsflüsse und die Einstellung des Reaktionsglieds des mechanisch-hydrodynamischen Antriebsstrangs in Abhängigkeit der Windturbinendrehzahl dar. |
| Figur 5 | zeigt die Einstellung eines Arbeitspunkts mit einer bestimmten Solldrehzahl der Windturbine oberhalb eines bestimmten Drehzahlschwellbereichs. |
| Figur 6 | zeigt den Einfluss einer Windböe auf eine Windkraftanlage mit geführter Windturbinendrehzahl im drehzahlstarren und drehzahlvariablen Betrieb durch Überlagerungsgetriebe und Stellwandler. |
| Figuren 7a bis 7d | zeigen den Vergleich der Drehmomenteneinprägung im Antriebsstrang durch die bestehende Lösung von Windkraftanlagen mit Frequenzumrichter und konstanter Getriebeübersetzung und einer leistungsverzweigten Windkraftanlage mit einem Stellwandler auf der Abtriebsseite. |
| Figur 8 | Regelungsanforderungen an einen Antriebsstrang für Windkraftanlagen |

Die Rotorleistung $p_R$ einer Windkraftanlage steht näherungsweise im folgenden Zusammenhang zur Windgeschwindigkeit $V_w$:

$$p_R = k\ c_p(v_w, \omega_R, \beta)\ v_w^3$$

Hierbei werden als k verschiedenen Konstanten wie etwa die Blattgeometrie sowie die Dichte der Luft zusammengefasst. Ferner bezeichnet cp den Leistungsbeiwert, der wiederum, wie dargestellt, von der Windgeschwindigkeit $V_w$, der Rotordrehzahl $\omega_R$ und der Winkelstellung der Rotorblätter, dem so genannten Pitchwinkel $\beta$, abhängt. Dieser Leistungsbeiwert zeichnet sich durch ein globales Maximum aus, welches sich bei steigenden Windgeschwindigkeiten $V_w$ zu größeren Rotordrehzahlen $\omega_R$ hin verschiebt.

Figur 2 zeigt diesen Zusammenhang durch die Darstellung der Wirkleistung eines Windrotors unter Berücksichtigung verschiedener Windgeschwindigkeiten. Dargestellt ist eine Kurvenschar (durchgezogene Kurven), welche exemplarisch die von einem Windrotor mit 70m Durchmesser aus der Luftströmung aufgenommene Leistung bei konstanter Rotorblattstellung für die Windgeschwindigkeiten 18 m/s, 16 m/s, 14 m/s, 12 m/s, 10 m/s, 8 m/s zeigt. Charakteristisch ist die Verschiebung der optimalen Rotordrehzahl zu höheren Werten mit steigender Windgeschwindigkeit. Die jeweiligen Leistungsmaxima liegen auf einer Kurve, die auch als Parabolik bezeichnet wird. Eine Drehzahlführung entlang dieser Kurve der optimalen Leistungsaufnahme wird im Folgenden als leistungsoptimale Drehzahlführung für die Eingangswelle des erfindungsgemäßen Antriebsstrangs bezeichnet. Eine drehzahlvariable Anlage kann somit in Abhängigkeit von der zur Verfügung stehenden Windgeschwindigkeit jeweils bei optimalen Leistungsbeiwerten betrieben werden. Zusätzlich zum drehzahlvariablen Betrieb bei Teillast werden Windkraftanlagen typischerweise für bestimmte Nennleistungen, verbunden mit einer Nenndrehzahl, ausgelegt sind, die jeweils bei Volllast erreicht und gehalten wird.

Aus Figur 2 ist ferner anhand der gestrichelt dargestellten Kurvenschar das Drehmoment des Windrotors ersichtlich. Die dargestellten Drehmomentverläufe sind den jeweiligen von der Windgeschwindigkeit abhängigen Leistungen zugeordnet, d.h. zu jeder leistungsoptimalen Drehzahl gehört ein Drehmomentwert, der jedoch nicht dem maximalen Drehmoment bei der entsprechenden Windgeschwindigkeit entspricht, sondern einen anderen Wert annimmt - siehe hierzu die fettgedruckte Drehzahlaufnahmekurve in Figur 2. Mit diesem vom Windrotor aufgenommen Drehmoment wird über den erfindungsgemäßen Antriebstrang der elektrische Generator angetrieben. Aus dem in Figur 2 dargestellten Drehmoment/Drehzahlverhältnis für einen Synchrongenerator ist ersichtlich, dass für eine eingeprägte Netzfrequenz von 50 Hz auf die Abtriebswelle des Antriebsstrangs für die unterschiedlichen übertragenen Drehmomente eine konstante Drehzahl von in diesem Beispiel 1500 U/min abtriebsseitig vorgegeben und gehalten wird. Wird statt des Synchrongenerators ein Asynchrongenerator verwendet, so stellt sich die Situation im Wesentlichen entsprechend dar, da bei einem Betrieb im linearen Bereich von einem so steilen Drehmoment/Drehzahlverhältnis ausgegangen werden kann, dass die Drehzahl der Abtriebswelle des Antriebsstrangs einen im Wesentlichen konstanten Wert aufweist.

Figur 1 zeigt eine mögliche Ausgestaltung eines erfindungsgemäßen Antriebsstrangs 1, dessen Eingangswelle 2 mit dem Rotor 3 einer Windkraftmaschine wenigstens mittelbar verbunden ist. Im vorliegenden Fall ist ein Getriebe 4 mit einem konstanten Übersetzungsverhältnis zwischen dem Rotor 3 der Windkraftmaschine und der Eingangswelle 2 platziert. Im hier dargestellten Ausführungsbeispiel wird als Leistungsverzweigungsgetriebe 5 des Antriebsstrangs 1 ein Planetenradgetriebe verwendet, wobei die Eingangswelle 2 mit dem Planetenradträger 6 in Verbindung steht. Im Leistungsverzweigungsgetriebe 5 liegen nun zwei Leistungszweige vor, der erste Leistungszweig 7 führt Leistung über das Sonnenrad 9 zur Ausgangswelle 10 des Antriebsstrangs. Diese Ausgangswelle 10 treibt wenigstens mittelbar den elektrischen Generator 11 an und steht in Wirkverbindung mit dem hydrodynamischen Stellwandler 12. Hierzu ist die Ausgangswelle 10 wenigstens mittelbar mit dem Pumpenrad 13 des hydrodynamischen Stellwandlers 12 verbunden. Als Reaktionsglied 15 wird im hydrodynamischen Wandler 12 ein Leitrad mit Stellschaufeln verwendet, mit dem der Leistungsfluss auf das Turbinenrad 14 eingestellt werden kann. Über das Turbinenrad 14 erfolgt wiederum ein Leistungsrückfluss, der nochmals über einen zweiten, starren Planetenradsatz 16 übersetzt wird, der seinerseits auf das Außenrad 17 des Leistungsverzweigungsgetriebes 5 wirkt und somit das Übersetzungsverhältnis beeinflusst. Dies stellt den zweiten Leistungszweig 18 des Leistungsverzweigungsgetriebes dar, der dem Leistungsrückfluss dient.

Der erfindungsgemäße Antriebsstrang ist nun so konstruktiv ausgebildet, dass durch die Wahl der mechanischen Übersetzungen im Leistungsverzweigungsgetriebe sowie durch die Dimensionierung des Wandlers die parabolische Kennlinie der optimalen Leistungsaufnahme durch den Windkraftrotor 3 nachgebildet wird. Ausgangspunkt hierfür ist, dass für jede Windgeschwindigkeit eine ideale Rotordrehzahl für die maximale Leistungsaufnahme aus der Luftströmung angegeben werden kann. Hierzu wird auf die voranstehende Darlegung zur Figur 2 verwiesen. Als weitere Bedingung ist gleichzeitig eine konstante Ausgangsdrehzahl des Antriebsstrangs für den elektrischen Generator vorgegeben. Im vorliegenden Fall liegt diese bei 1500 U/min. Die notwendigen Umlaufgeschwindigkeiten der Getriebekomponenten des Leistungsverzweigungsgetriebes, etwa des Außenrades und des Sonnenrades, können nun unter Beachtung dieser Vorgaben für jede Windgeschwindigkeit im Teillastbereich festgelegt werden. Hierzu ist zu beachten, dass der Antriebsstrang die parabolische Leistungsaufnahmecharakteristik für eine im Wesentlichen konstant bleibende Stellung des Reaktionsglieds 15 des hydrodynamischen Stellwandlers 12 nachbilden muss.

Figur 3 stellt die sich am Antriebsstrang einstellenden Drehzahlen sowie die in den einzelnen Zweigen übertragenden Leistungen dar. Im Einzelnen zeigt die Kurve A die Drehzahl der Abtriebswelle 10, Kurve B die Drehzahl des Turbinenrads 14 des hydrodynamischen Wandlers 12, Kurve C die Drehzahl der Eingangswelle 2 und die Kurve D die Drehzahl auf dem Außenrad 17 des Leistungsverzweigungsgetriebes 5. Für die Leistungsflüsse stellt die Kurve E die vom Windrotor aufgenommene Leistung dar, Kurve F ist die Leistung auf dem Sonnenrad 9, Kurve G die vom Antriebsstrang übertragene Leistung und Kurve H gibt die über den zweiten Leistungszweig 18 vom hydrodynamischen Wandler 12 auf das Leistverzweigungsgetriebe 5 zurückfließende Leistung.

Figur 4 zeigt nochmals den Leistungsfluss für dieses Ausführungsbeispiel sowie die Einstellung des Reaktionsglieds des hydrodynamischen Stellwandlers, im vorliegenden Fall des Leitrads. Die Leistungsflusskurven E, F, G und H entsprechen jenen aus Figur 3. Sichtbar ist, dass bei einer optimalen Leistungsaufnahme entlang der Parabolik, die durch die Charakteristik des Antriebsstrangs nachgebildet werden kann, mit einer über den gesamten dargestellten Teillastbereich mit einer im Wesentlichen gleich bleibenden Leitschaufelstellung gearbeitet werden kann. Diese Einstellung wird nachfolgend als die justierte Einstellung des hydrodynamischen Wandlers bezeichnet. Es ist also keine Regelung des Reaktionsglieds nötig, um die Konstanz der Ausgangsdrehzahl des Antriebsstrangs zur Beschickung des elektrischen Generators bei gleichzeitiger variabler optimaler Windrotordrehzahl zu erreichen. Hierbei wird darauf verwiesen, dass die Steilheit der die Leistungsaufnahme charakterisierenden Parabel durch die Übersetzungsdimensionierung der Komponenten des Leistungsverzweigungsgetriebes wie durch die Dimensionierung des Wandlers eingestellt werden kann. Diese Charakteristik des erfindungsgemäßen Antriebsstrangs wird nachfolgend als Selbstregelung bezeichnet.

Figur 5 stellt nun den Fall dar, dass die optimale Leistungseingangsparabel durch die Dejustage des hydrodynamischen Stellwandlers verlassen wird, um oberhalb einer bestimmten Drehzahlschwellbereichs eine bestimmte Solldrehzahl dem Windkraftrotor aufzuprägen und ihn insbesondere oberhalb dieser Drehzahlschwelle auf einer konstanten Drehzahl zu halten. Die dargestellte Kurvenschar stellt unterschiedliche Leitradstellungen (H=0,25-1,0) dar. Im vorliegenden Fall ist der hydrodynamische Stellwandler bei mit einer Leitradstellung von H=0,25 justiert.

Drehzahlen, die niedriger als die Schwelldrehzahl sind, welche im vorliegenden Ausführungsbeispiel bei 15,5 U/min liegt, folgen der idealen Leistungsaufnahmeparabel. Dies entspricht der voranstehend dargestellten Situation einer Drehzahlführung einer Windkraftturbine zur optimalen Leistungsaufnahme aus der Windströmung, wobei gleichzeitig die vom elektrischen Generator auf der Ausgangswelle des Antriebsstrangs geforderte konstante Drehzahl eingehalten wird.

Oberhalb der Schwelldrehzahl, im vorliegenden Fall 15,5 rpm, wird nun durch eine Verstellung des Reaktionsglieds des hydrodynamischen Stellwandlers der Antriebsstrang so eingestellt, dass sich das Gesamtsystem aus Windkraftrotor und Antriebsstrang in einem neuen Arbeitspunkt auf einer neuen Leistungsaufnahmeparabel einpendelt. Hierbei bleiben die Ausgangsdrehzahl des Antriebsstrangs und somit die Drehzahl des elektrischen Generators weiterhin konstant.

Aus Figur 5 ist ersichtlich, dass durch die Dejustage des hydrodynamischen Stellwandlers unterschiedliche Arbeitspunkte gewählt werden können. Dies eröffnet die Möglichkeit, die Drehzahl der Windkraftturbine einzustellen, im einfachsten Fall wird so die Drehzahl begrenzt, gleichwohl ist es jedoch auch möglich, die Arbeitspunkte für die gewünschte Drehzahl der Windkraftturbine entlang einer Kurve einzustellen, die vom durch die Windkraftturbine aufgenommenen Drehmoment abhängt. Hierdurch ist es möglich, insbesondere die Weichheit des Antriebsstrangs an der Grenze zum Volllastbetrieb der Windkraftanlage anzupassen.

Um jeden durch Dejustage des Wandlers eingestellten Arbeitspunkt ergibt sich wiederum die parabolische Leistungsaufnahmecharakteristik, welche bei variierenden Windgeschwindigkeiten durchlaufen wird. Diese Situation ist in Figur 5 dargestellt. Hierbei ist zu beachten, dass die Einstellung eines bestimmten Arbeitspunkts langsam, d. h. im Minutenbereich, vorgenommen werden kann und in Abhängigkeit zur mittleren Windgeschwindigkeit steht. Die möglichen Schwankungen um diesen Arbeitspunkt, die durch die Systemcharakteristik des Antriebsstrangs jeweils durch eine Selbstregelung ausgeglichen werden, sind kurzzeitige Effekte wie sie durch Fluktuationen, insbesondere Böen, im Windprofil entstehen. Diese Schwankungsbreite sollte kleiner ± 30 % der gewünschten Drehzahl im Arbeitspunkt, bevorzugt ± 10 % und insbesondere bevorzugt ± 5 % nicht überschreiten.

Durch das erfindungsgemäße Verfahren oberhalb eines Drehzahlschwellwertes der Windkraftturbine durch die Dejustage eines ansonsten auf die Charakteristik des Leistungsaufnehmers angepassten mechanisch-hydrodynamischen Antriebsstrangs mit einem Leistungsverzweigungsgetriebe und einem hydrodynamischen Stellwandler gelingt es, eine Abriegelung der Windkraftturbine beim Übergang zwischen Teillast und anderen Betriebspunkten und eine Begrenzung der Drehzahl zur Limitierung der Geräuschentwicklung mit einer hohen Weichheit und einer Selbstregelungscharakteristik des Antriebsstrangs zu verbinden. Insbesondere Letzteres ist wie in Figur 6 gezeigt beim Auftreten von Böen ein Vorteil gegenüber Systemen mit einer Abriegelung durch das Moment, welches ein Umrichter gesteuerter elektrischer Generator auf der Abtriebsseite des Antriebsstrangs generiert.

Im Einzelnen ist in Figur 6 das Auftreten einer Böe im zeitlichen Verlauf durch den Auftrag der relativen Windgeschwindigkeit gezeigt. Als Reaktion wird ein System mit einem nach dem erfindungsgemäßen Verfahren gesteuerten Antriebsstrang mit einem vollständig drehzahlstarr ausgelegten System verglichen. Das drehzahlstarr ausgelegte System muss das durch die Böe ausgelöste zusätzliche Moment auf der Windkraftturbine auffangen (siehe den Drehmomentverlauf gemäß Kurve I), während das erfindungsgemäße System lediglich den Arbeitspunkt entlang der Leistungsaufnahmeparabolik verlässt, und als Folge der Böe einen gewissen Drehzahlanstieg entsteht (Kurve IV) und damit auch eine zusätzliche Leistungaufnahme durch die Massenträgheitsmomente von Windrotor und Getriebe vorliegt und somit eine wesentliche Momentenreduzierung (Kurve II) im Antriebsstrang aufweist, was wesentlich die Überlastfälle zur Auslegung des Triebstrangs reduziert. Der erfindungsgemäße Antriebsstrang zeichnet sich somit durch eine Kraftstoßreduktion aus. Nach der Böe gleicht sich die Drehzahl des Windkraftrotors wieder aufgrund des Selbstregelungseffekts der Arbeitspunkteinstellung an und die zusätzlich vorhandene kinetische Energie im Windrotor und Triebstrang wird an den Generator weitergegeben. Im Vergleich hierzu nimmt das drehzahlstarre System während einer Böe keine zusätzliche Leistung auf. Deutlich zu sehen ist, dass das erfindungsgemäße System wesentlich weicher reagiert, was insbesondere vorteilhaft für die Standzeit der Windkraftanlage durch die Reduzierung des Niveaus der Überlastfälle ist. Dieser Effekt ist auf eine kurze Energiespeicherung des mechanisch-hydrodynamischen Antriebsstrangs zurückzuführen.

Ausgehend von einem typischen Windprofil gemäß Figur 7a kann ein dem Stand der Technik entsprechendes elektronisch geregeltes System II mit dem erfindungsgemäßen Antriebsstrang I verglichen werden. Figur 7b zeigt den Verlauf der Rotorgeschwindigkeiten und verdeutlicht, dass der erfindungsgemäße Antriebsstrang I geringere Drehzahlausschläge aufweist. Ferner ist aus Figur 7c ersichtlich, dass im Gegensatz zum elektronisch geregelten System die Generatordrehzahl im Wesentlichen konstant gehalten werden kann. Zusätzlich zeigt Figur 7d, dass es mit dem erfindungsgemäßen Antriebsstrang I gelingt, Kraftstöße in Leistung umzusetzen und damit den Drehmomentverlauf deutlich glatter zu gestalten.

Figur 8 fasst die unterschiedlichen Regelungsanforderungen an einen Antriebsstrang für eine Windkraftanlage (parabolisch, lärmbegrenzt und Kurzzeitenergiespeicherung mit Kraftstoßreduktion) zusammen. Die leistungsoptimale Drehzahlführung des Windrotors wird für eine Begrenzung der Geräuschentwicklung des Windkraftrotors oberhalb einer bestimmten Schwelldrehzahl verlassen und die Drehzahl der Eingangswelle des Antriebsstrangs wird entlang einer steileren Verlaufskurve geführt. Ein wichtiger Vorteil des erfindungsgemäßen Antriebsstrangs ist, dass in jedem Arbeitspunkt dieses Rotordrehzahlsollverlaufs die Eigenschaft der Selbstregelung des Antriebsstrangs greift und so eine Kurzzeitenergiespeicherung und eine Kraftstoßreduktion erreicht wird.

**Patentansprüche**

1. Verfahren für die Steuerung eines Antriebsstrangs, dessen Eingangswelle wenigstens mittelbar von einem von einem Leistungsaufnehmer einer Wind- oder Wasserkraftmaschine oder einer anderen Strömungskraftmaschine angetrieben wird und dessen Ausgangswelle wenigstens mittelbar einen elektrischen Generator antreibt, wobei die Ausgangswelle mit einer Drehzahl umläuft, die höher als die Drehzahl der Eingangswelle ist;

1.1 der Generator ist mit einem elektrischen Netz verbunden, welches eine im Wesentlichen konstante Netzfrequenz aufweist;
1.2 der Antriebsstrang umfasst ein Leistungsverzweigungsgetriebe und einen hydrodynamischen Stellwandler;
1.3 das Leistungsverzweigungsgetriebe umfasst zwei Leistungszweige;
1.4 der hydrodynamische Stellwandler umfasst ein Pumpenrad, ein Turbinenrad und ein einstellbares Reaktionsglied;
1.5 über die Eingangswelle des Antriebsstrangs wird wenigstens mittelbar Leistung dem Leistungsverzweigungsgetriebe zugeführt;
1.6 ein erster Leistungszweig des Leistungsverzweigungsgetriebes überträgt wenigstens mittelbar Leistung auf die Ausgangswelle des Antriebsstrangs;
1.7 das Pumpenrad des hydrodynamischen Stellwandlers ist wenigstens mittelbar mit der Ausgangswelle des Antriebsstrangs verbunden;
1.8 das Turbinenrad des hydrodynamischen Stellwandlers ist wenigstens mittelbar mit dem zweiten Leistungszweig des Leistungsverzweigungsgetriebes verbunden und erzeugt einen Leistungsrückfluss zum Leistungsverzweigungsgetriebe;
1.9 die Kombination aus Leistungsverzweigungsgetriebe und hydrodynamischen Stellwandler, weist in der Regelung die gleiche Charakteristik wie der Leistungsaufnehmer bei leistungsoptimaler Drehzahlführung auf;
1.10 überschreitet die Drehzahl der Eingangswelle des Antriebsstrangs einen bestimmten Schwellwert wird das Reaktionsglied des hydrodynamischen Stellwandlers so eingestellt, dass der Eingangwelle des Antriebsstrangs eine mittlere Drehzahl eingeprägt wird, welche eine Funktion des von der Eingangwelle des Antriebsstrangs aufgenommenen Moments ist.

**2.** Verfahren zur Steuerung eines Antriebsstrangs nach Anspruch 1, **dadurch gekennzeichnet, dass** der Schwellwertbereich für die Drehzahl der Eingangswelle des Antriebsstrangs so gewählt wird, dass der Windkraftrotor einen bestimmten Lärmpegel nicht überschreitet.

**3.** Verfahren für die Steuerung eines Antriebsstrangs nach Anspruch 1 oder 2, **dadurch gekennzeichnet, dass** die Drehzahl der Eingangswelle des Antriebsstrangs oberhalb des Schwellwertbereichs im Wesentlichen konstant ist.

**4.** Verfahren für die Steuerung eines Antriebsstrangs nach Anspruch 1 oder 2, **dadurch gekennzeichnet, dass** die Ausgangswelle des Antriebsstrangs im Wesentlichen mit einer konstanten Drehzahl umläuft.

**5.** Verfahren für die Steuerung eines Antriebsstrangs nach einem der Ansprüche 1 bis 4, **dadurch gekennzeichnet, dass** die Windkraftturbine und der von der Windkraftturbine angetriebene Antriebsstrang im Wesentlichen die gleiche Drehzahlabhängigkeit in der Leistungsaufnahme aufweisen.

**6.** Verfahren für die Steuerung eines Antriebsstrangs nach Anspruch 1 bis 5, **dadurch gekennzeichnet, dass** der Schwellwertbereich unterschiedlich groß definiert werden kann.

**7.** Verfahren für die Steuerung eines Antriebsstrangs nach Anspruch 1 bis 6, **dadurch gekennzeichnet**, durch die Festlegung der Schwellwertbereich unterschiedlich Weichheiten und Kurzzeitenergieeinspeicherungen des Systems definiert.

**8.** Verfahren für die Steuerung eines Antriebsstrangs nach Anspruch 1 bis 7, **dadurch gekennzeichnet, dass** in jedem Arbeitspunkt ein parabolischer Verlauf für den Windrotor durch vorliegt.

## Claims

**1.** A method of controlling a drive train, whose input shaft is driven at least indirectly by a power sensor of a wind or hydro power station or another generator, wherein the output shaft rotates with a speed which is greater than the rotation speed of the input shaft;

1.1 the generator is connected with an electrical mains, which presents a substantially constant mains frequency;

1.2 the drive train includes a power-split transmission and a hydrodynamic adjustment converter;
1.3 the power-split transmission contains two power branches;
1.4 the hydrodynamic adjustment converter includes a pump wheel, a turbine wheel and an adjustable reaction member;
1.5 power is conveyed at least indirectly to the power-split transmission via the input shaft of the drive train;
1.6 a first power branch of the power-split transmission transmits power at least indirectly on the output shaft of the drive train;
1.7 the pump wheel of the hydrodynamic adjustment converter is connected at least indirectly to the output shaft of the drive train;
1.8 the turbine wheel of the hydrodynamic adjustment converter is connected at least indirectly to the second power branch of the power-split transmission and generates a power return flow to the power-split transmission;
1.9 the combination of power-split transmission and hydrodynamic adjustment converter presents as a rule the same characteristic as the power sensor with performance optimal speed adjustment;
1.10 if the rotation speed of the input shaft of the drive train exceeds a set threshold value, the reaction member of the hydrodynamic adjustment converter is adjusted in such a way that the input shaft of the drive train is allocated a medium rotation speed, which is function of the torque absorbed by the input shaft of the drive train.

**2.** A method of controlling a drive train according to claim 1, **characterised in that** the threshold value range for the rotation speed of the input shaft of the drive train is selected in such a way that the wind force rotor does not exceed a set noise level.

**3.** A method of controlling a drive train according to claim 1 or 2, **characterised in that** the rotation speed of the input shaft of the drive train above the threshold value range is substantially constant.

**4.** A method of controlling a drive train according to claim 1 or 2, **characterised in that** the output shaft of the drive train substantially rotates at constant rotation speed.

**5.** A method of controlling a drive train according to one of the claims 1 to 4, **characterised in that** the wind turbine and the drive train driven by the wind turbine substantially present an identical rotation speed dependence as regards power absorption.

**6.** A method of controlling a drive train according to claim 1 to 5, **characterised in that** the threshold value range can be set at different levels.

**7.** A method of controlling a drive train according to claim 1 to 6, **characterised in that** setting the threshold value range enables to set various weaknesses and transient energy storages of the system.

**8.** A method of controlling a drive train according to claim 1 to 7, **characterised in that** the wind rotor follows a parabolic curve in every working point.

## Revendications

**1.** Procédé de commande d'un train d'entraînement, dont l'arbre d'entrée est entraîné au moins indirectement par un capteur de puissance de centrale éolienne ou hydraulique ou autre moteur turbo et dont l'arbre de sortie entraîne au moins indirectement un générateur électrique, dans lequel l'arbre de sortie tourne à une vitesse de rotation qui est supérieure à la vitesse de rotation de l'arbre d'entrée;

1.1 le générateur est connecté à un secteur électrique,qui présente une fréquence de secteur sensiblement constante;
1.2 le train d'entraînement comprend une transmission à ramification de puissance et un convertisseur de réglage hydrodynamique;
1.3 la transmission à ramification de puissance comprend deux embranchements de puissance;
1.4 le convertisseur de réglage procédé d'optimisation comprend une roue de pompe, une roue de turbine et un élément de réaction réglable;
1.5 l'énergie est acheminée au moins indirectement à la transmission à ramification de puissance par te biais de l'arbre d'entrée du train d'entraînement;
1.6 un premier embranchement de puissance de la transmission à ramification de puissance transfère de l'énergie au moins indirectement à l'arbre de sortie du train d'entraînement;

1.7 la roue de pompe du convertisseur de réglage hydrodynamique est connectée au moins indirectement à l'arbre de sortie du train d'entraînement;

1.8 la roue de turbine du convertisseur de réglage hydrodynamique est connectée au moins indirectement au second embranchement de puissance de la énergie et génère un reflux d'énergie en direction de la transmission à ramification de puissance;

1.9 la combinaison de la transmission à ramification de puissance et convertisseur de réglage hydrodynamique présente en règle générale la même caractéristique que le capteur de puissance pour une gestion de vitesse de rotation avec une énergie optimale;

1.10 si la vitesse de rotation de l'arbre d'entrée du train d'entraînement dépasse un certain seuil l'élément de réaction du convertisseur de réglage hydrodynamique esi réglé de telle sorte que l'arbre d'entrée du train d'entraînement subit une vitesse de rotation médiane, qui est fonction du couple absorbé par l'arbre d'entrée du train d'entraînement.

**2.** Procédé de commande d'un train d'entraînement selon la revendication 1, **caractérisé en ce que** l'on sélectionne la fourchette de seuil de vitesse de rotation de l'arbre d'entrée du train d'entraînement de telle sorte que le rotor d'éolienne ne dépasse pas un certain niveau sonore.

**3.** Procédé de commande d'un train d'entraînement selon la revendication 1 ou 2, **caractérisé en ce que** la vitesse de rotation de l'arbre d'entrée du train d'entraînement au-dessus de la fourchette de seuil est sensiblement constante.

**4.** Procédé de commande d'un train d'entraînement selon la revendication 1 ou 2, **caractérisé en ce que** l'arbre de sortie du train d'entraînement tourne sensiblement à une vitesse de rotation constante.

**5.** Procédé de commande d'un train d'entraînement selon l'une quelconque des revendications 1 à 4, **caractérisée en ce que** la turbine éolienne et le train d'entraînement entraîné par la turbine éolienne présentent sensiblement la même dépendance à la vitesse de rotation lors de la consommation d'énergie.

**6.** Procédé de commande d'un train d'entraînement selon une revendication 1 à 5, **caractérisé en ce que** l'on peut définir la fourchette de seuil de manière variable.

**7.** Procédé de commande d'un train d'entraînement selon une revendication 1 à 6, **caractérisé en ce que** la fourchette de seuil permet de définir diverses faiblesses et des stockages d'énergie transitoire du système.

**8.** Procédé de commande d'un train d'entraînement selon une revendication 1 à 7, **caractérisé par** la présence d'une courbe parabolique pour le rotor d'éolienne en chaque point de travail:

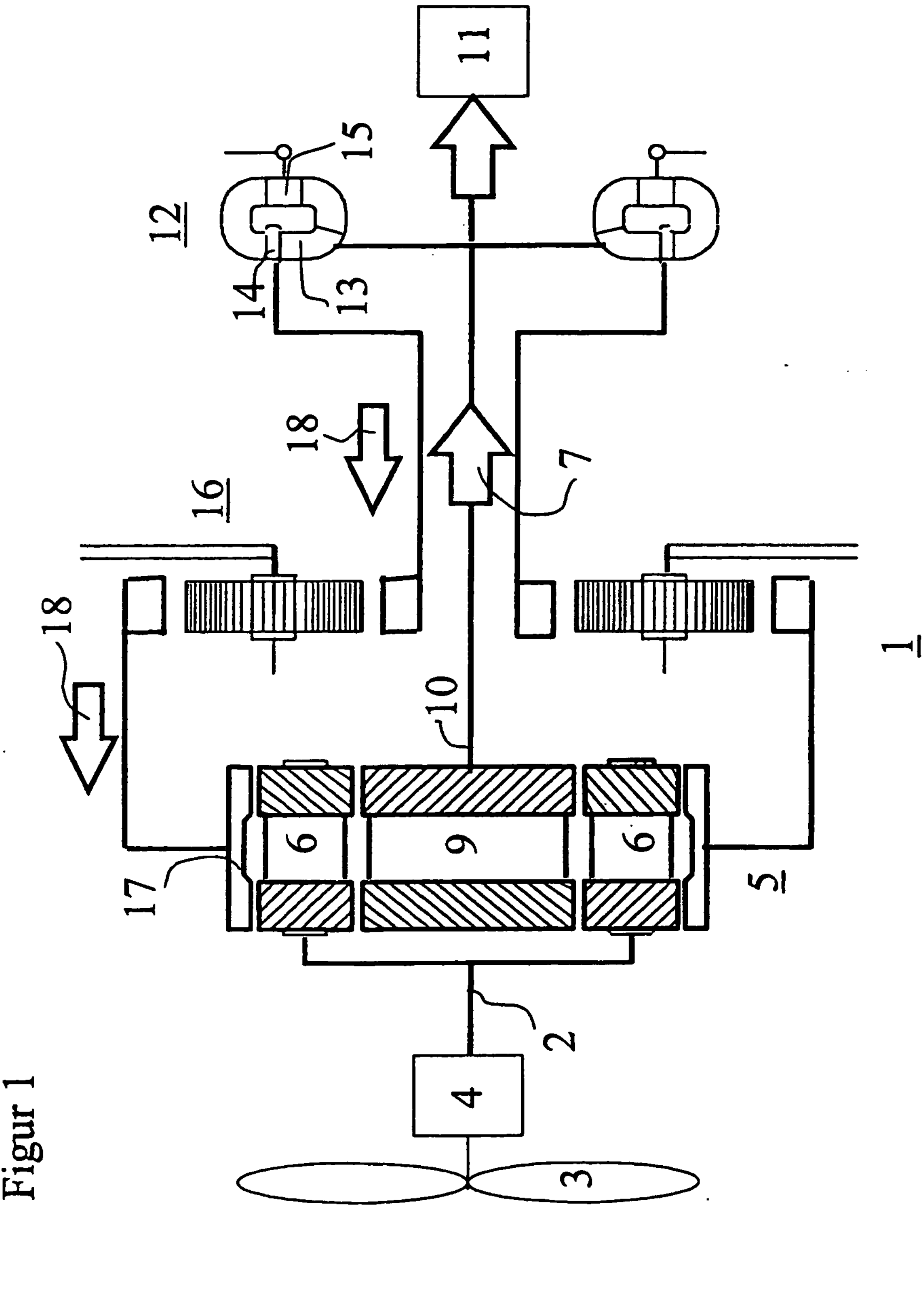


Figur 1

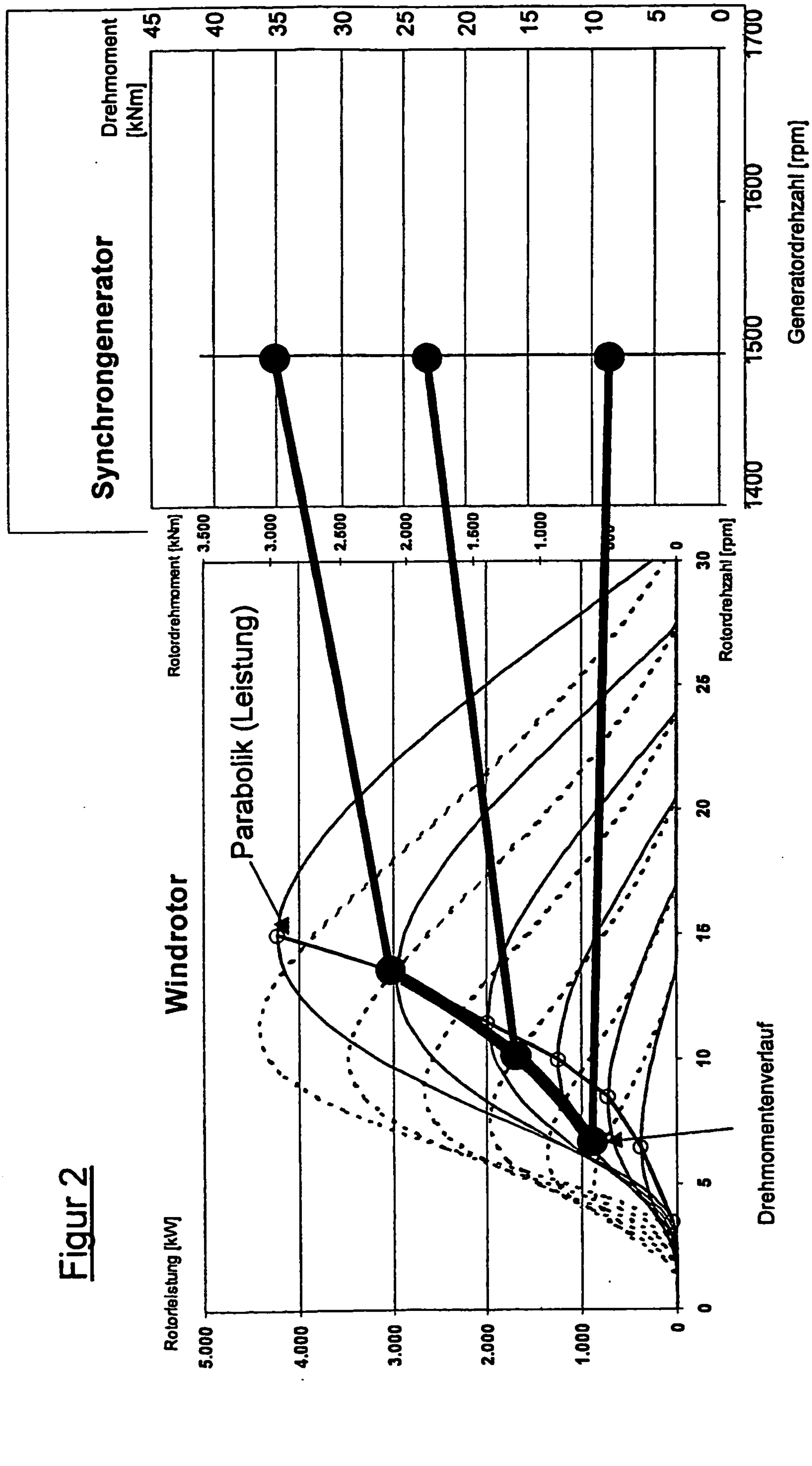
Synchrongenerator
Drehmoment [kNm]
45
40
35
30
25
20
15
10
5
0
1400
1500
1600
1700
Generatordrehzahl [rpm]
Windrotor
Parabolik (Leistung)
Drehmomentenverlauf
Rotorleistung [kW]
5.000
4.000
3.000
2.000
1.000
0
Rotordrehmoment [kNm]
3.500
3.000
2.500
2.000
1.500
1.000
0
5
10
15
20
25
30
Rotordrehzahl [rpm]

Figur 2

Figur 3

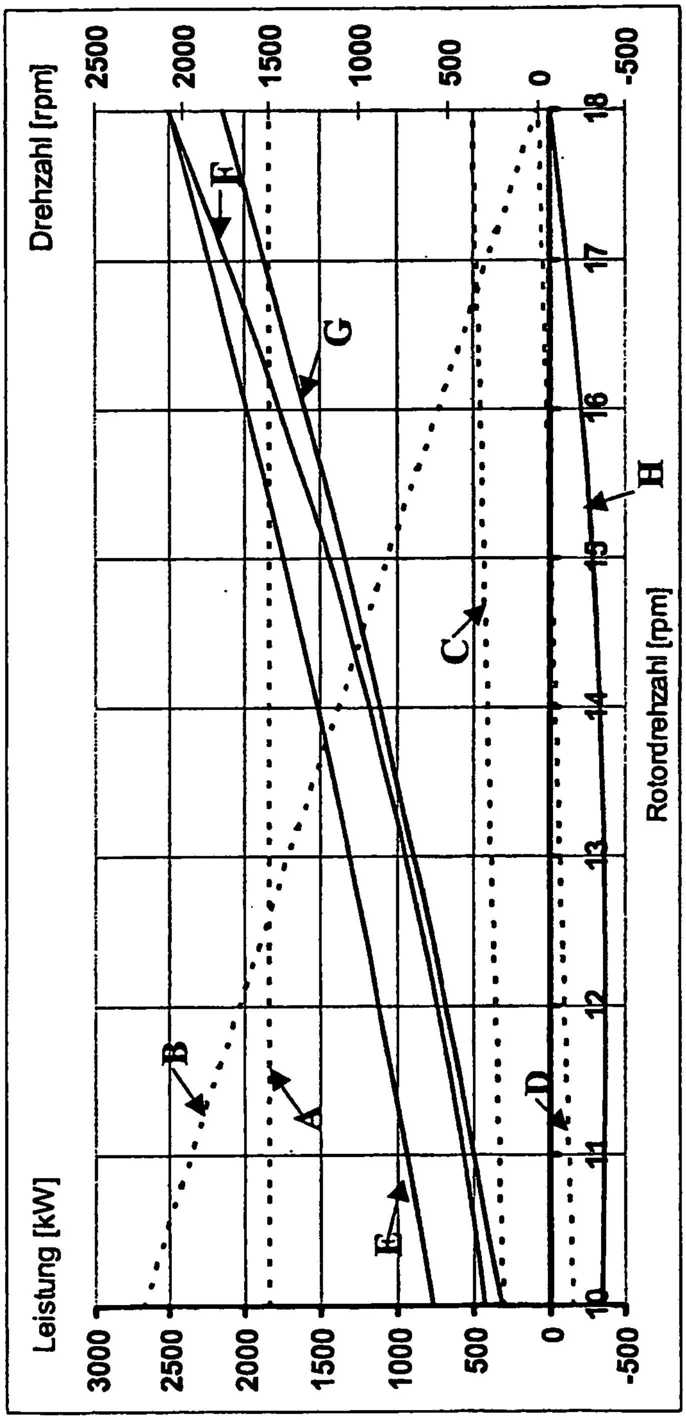

Leistung [kW]
Drehzahl [rpm]
Rotordrehzahl [rpm]
3000
2500
2000
1500
1000
500
0
-500
10
11
12
13
14
15
16
17
18
A
B
C
D
E
F
G
H

Figur 4

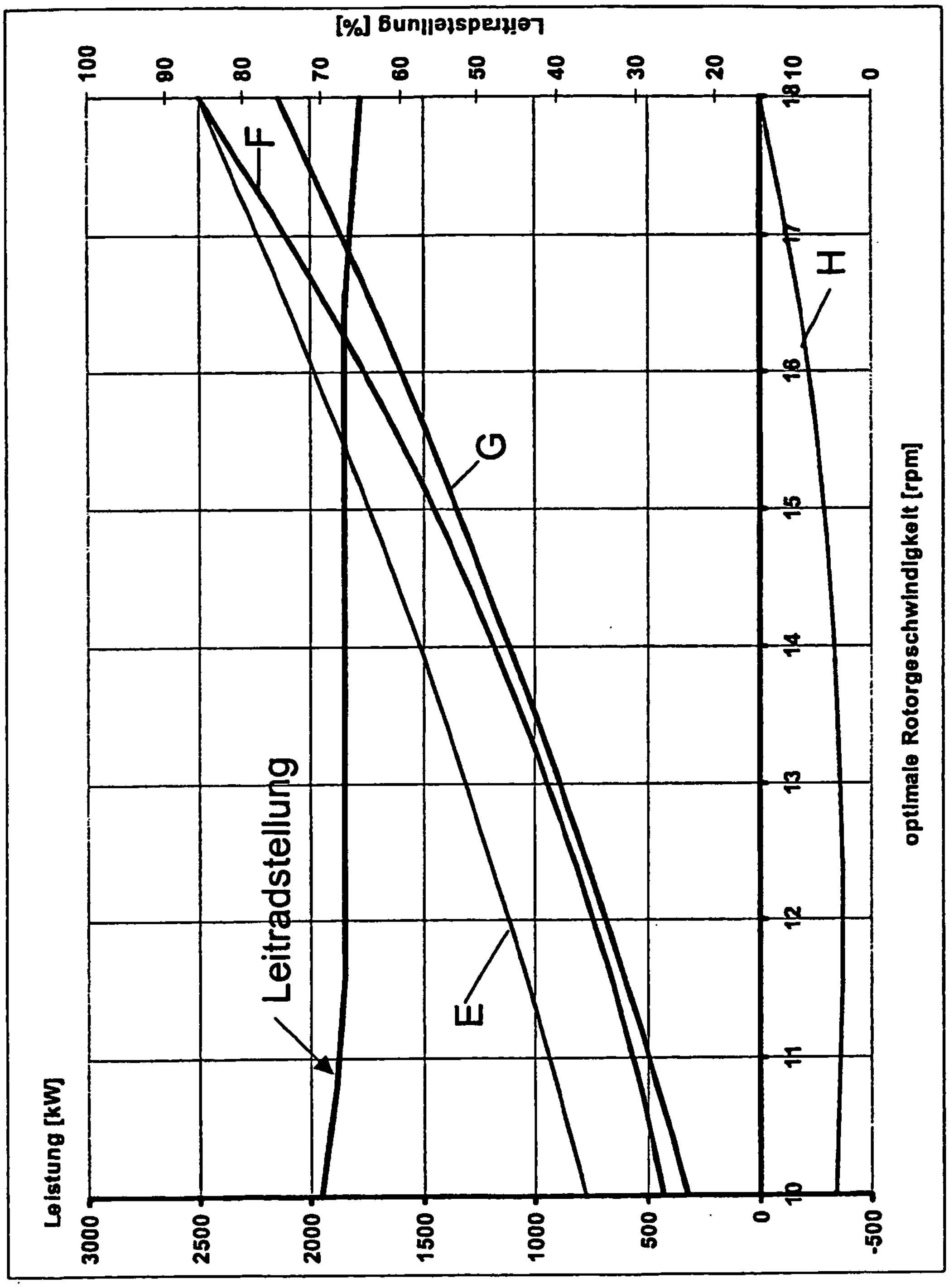
Leistung [kW]
3000
2500
2000
1500
1000
500
0
-500
Leitradstellung [%]
100
90
80
70
60
50
40
30
20
10
0
optimale Rotorgeschwindigkeit [rpm]
10
11
12
13
14
15
16
17
18
Leitradstellung
E
F
G
H

Figur 5

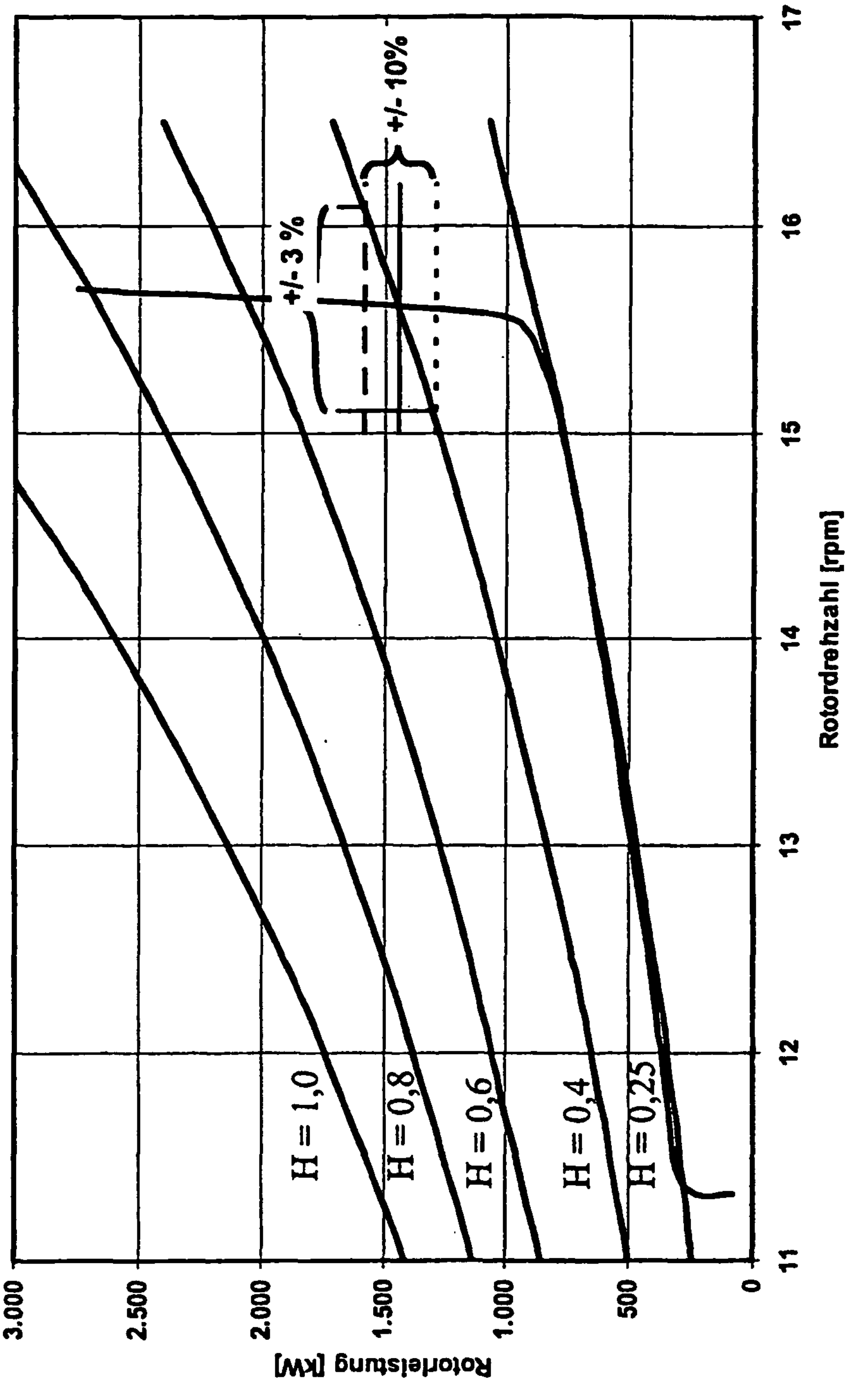

3.000
2.500
2.000
1.500
1.000
500
0
Rotorleistung [kW]
11
12
13
14
15
16
17
Rotordrehzahl [rpm]
H = 1,0
H = 0,8
H = 0,6
H = 0,4
H = 0,25
+/- 3 %
+/- 10%

Figur 6

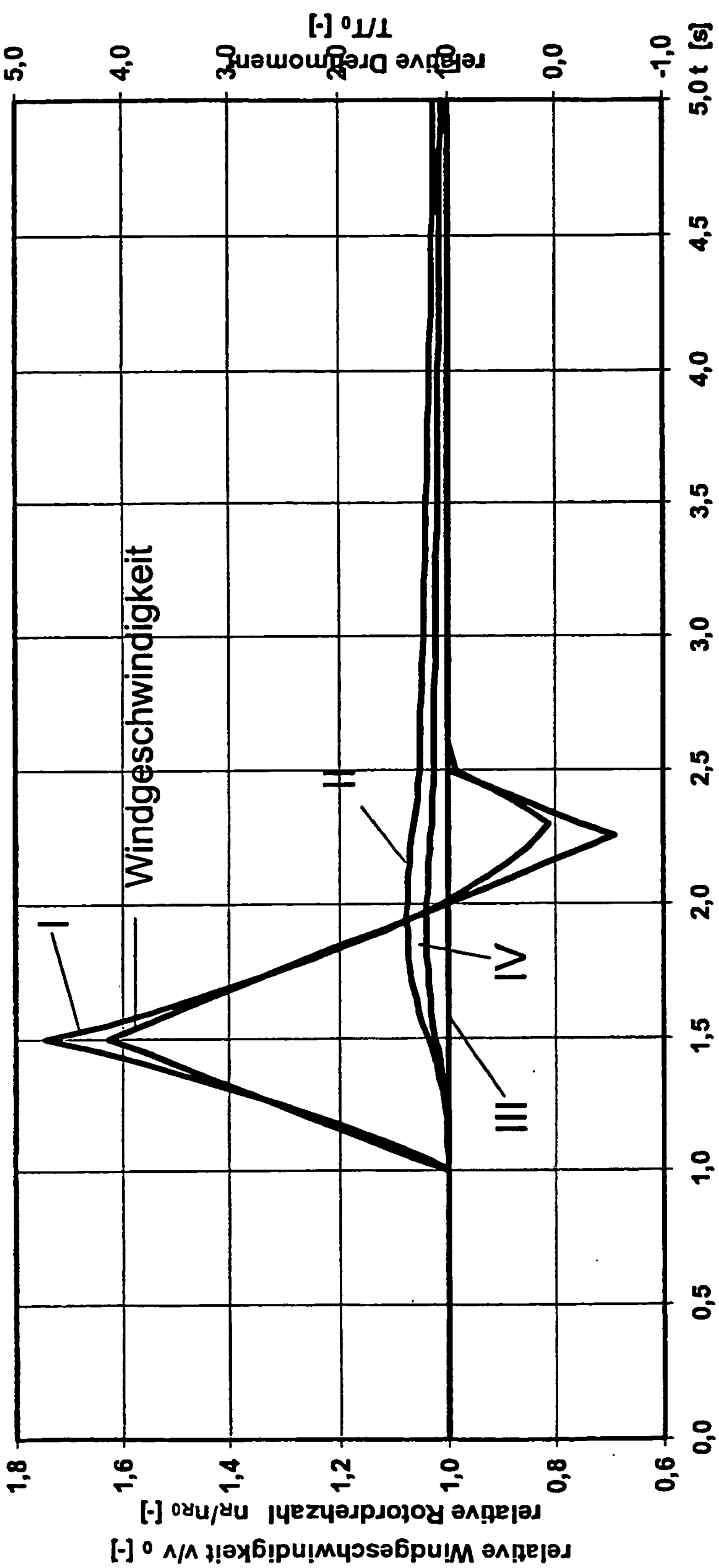
relative Windgeschwindigkeit v/v ₀ [-]
relative Rotordrehzahl $n_R/n_{R0}$ [-]
relative Drehmoment $T/T_0$ [-]
Windgeschwindigkeit
I
II
III
IV
1,8
1,6
1,4
1,2
1,0
0,8
0,6
5,0
4,0
3,0
2,0
1,0
0,0
-1,0
0,0
0,5
1,0
1,5
2,0
2,5
3,0
3,5
4,0
4,5
5,0 t [s]

Figur 7a

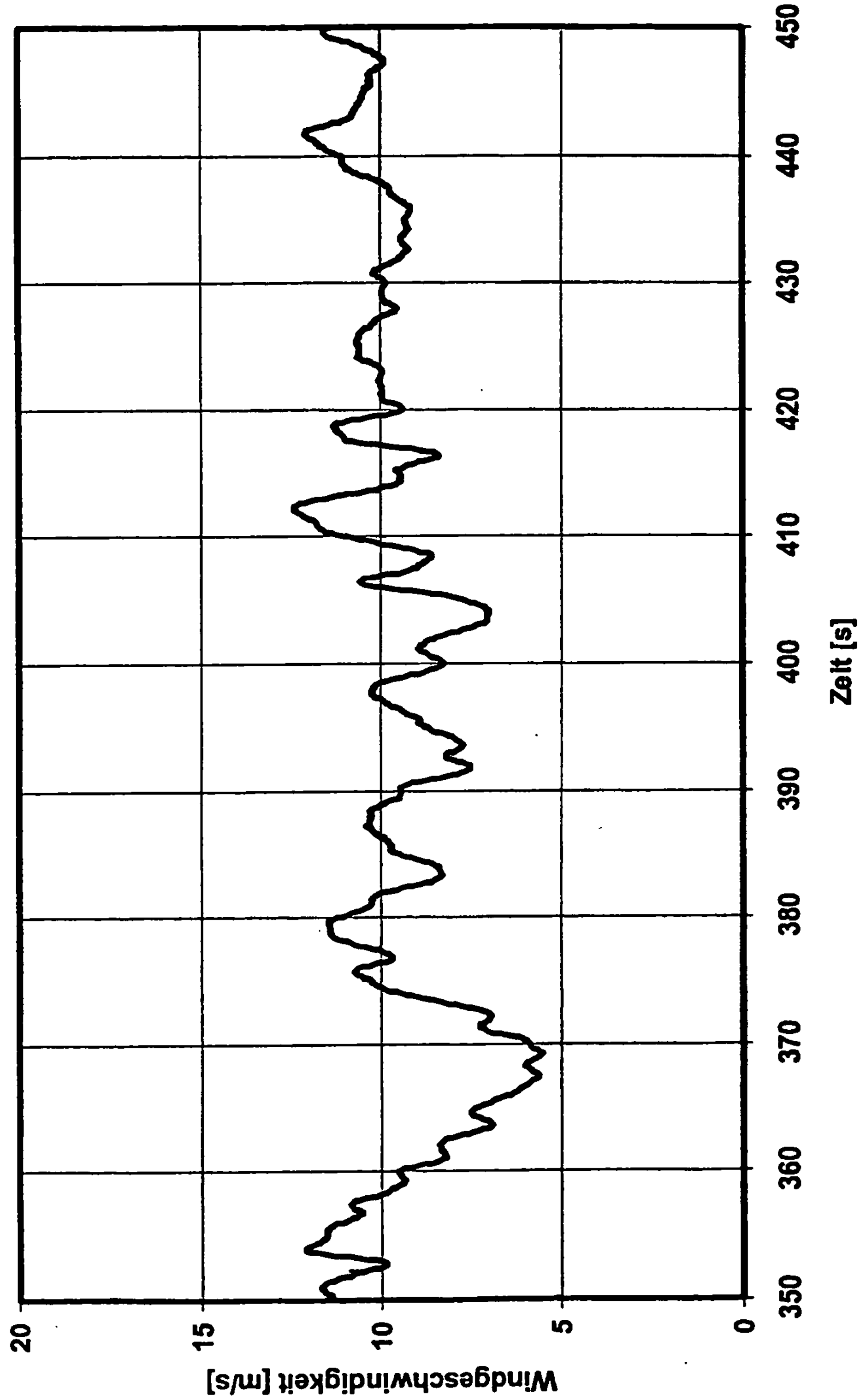
Windgeschwindigkeit [m/s]
0
5
10
15
20
Zeit [s]
350
360
370
380
390
400
410
420
430
440
450

Figur 7b

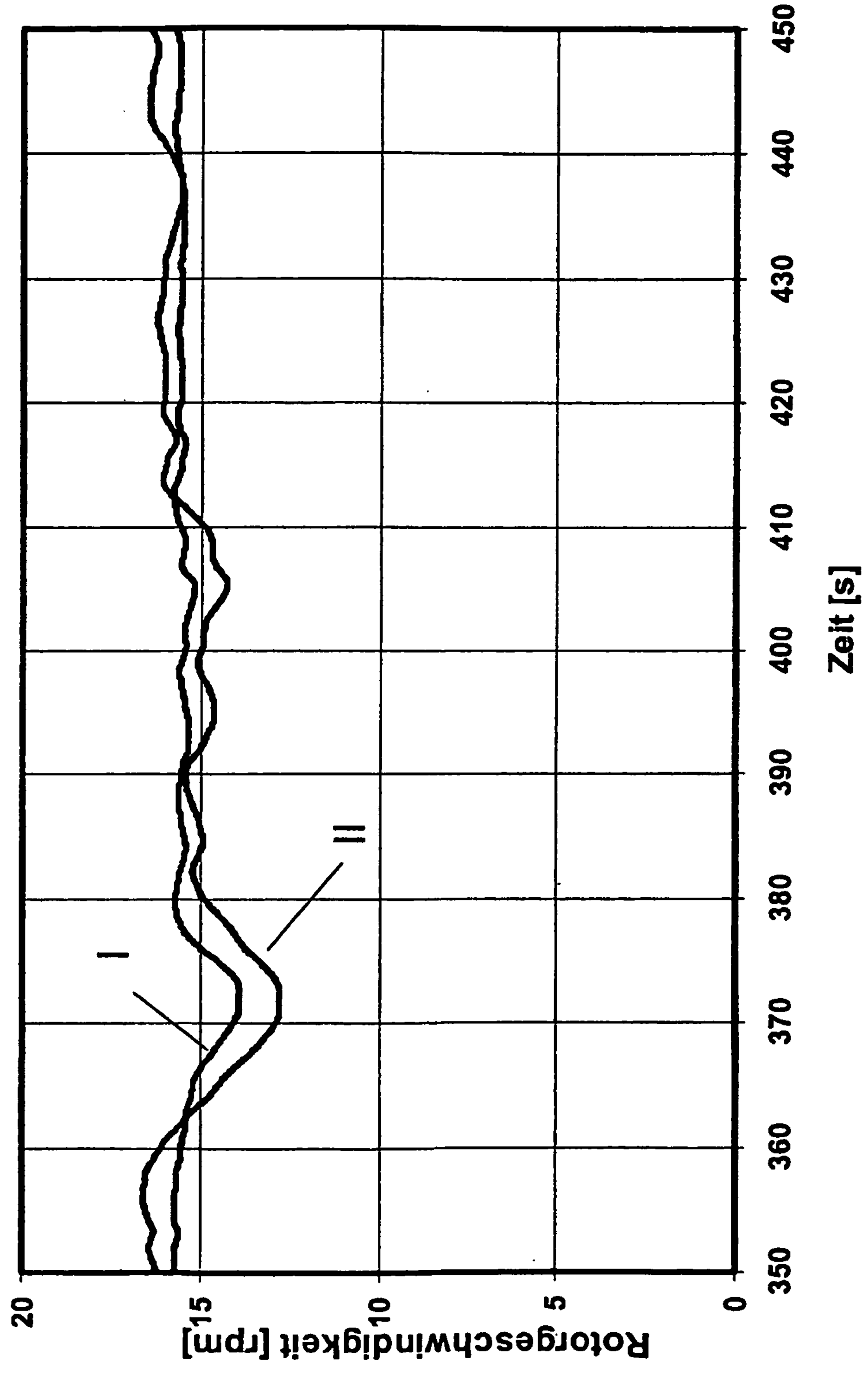
I
II
20
15
10
5
0
Rotorgeschwindigkeit [rpm]
350
360
370
380
390
400
410
420
430
440
450
Zeit [s]

Figur 7c

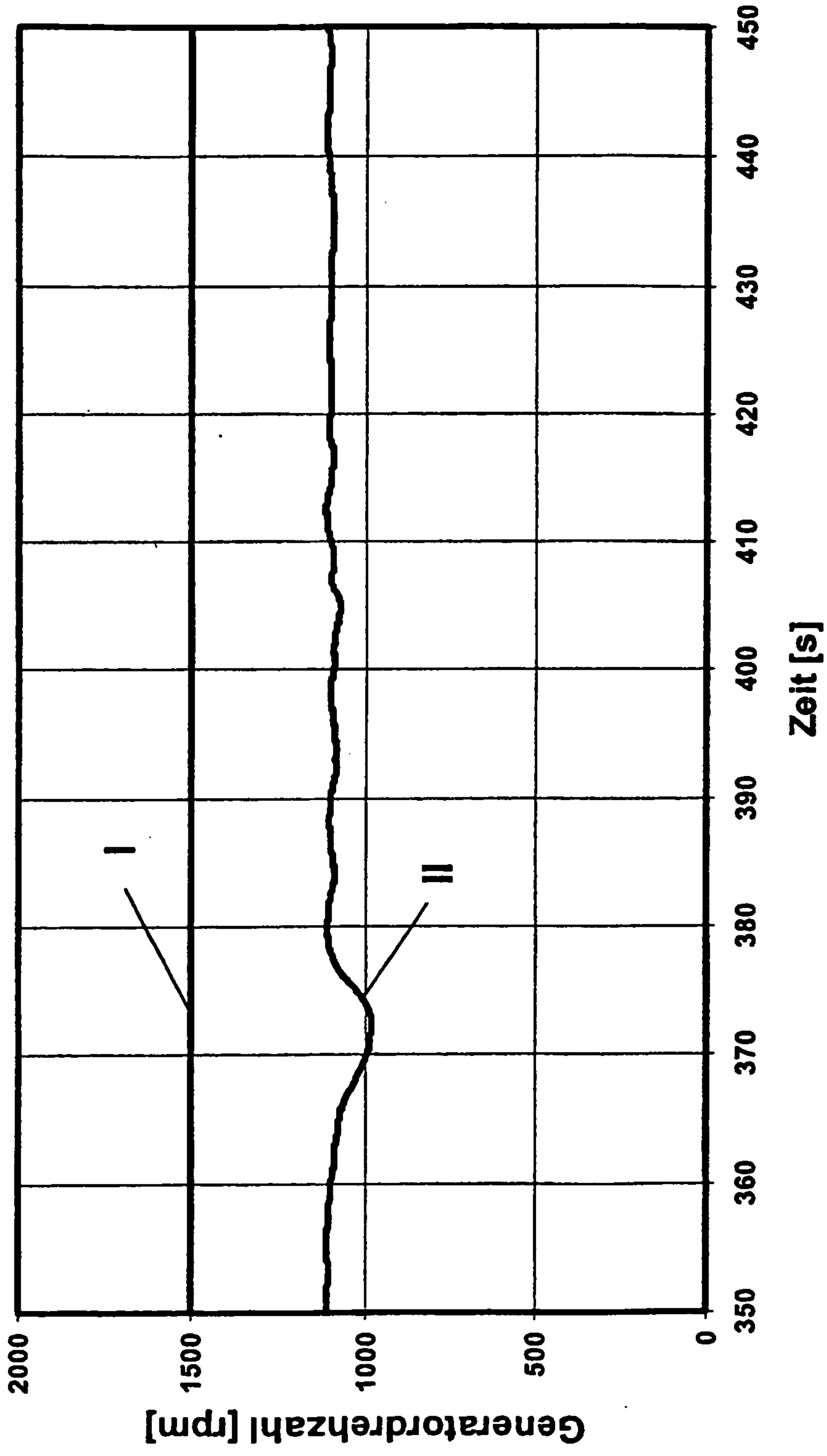
I
II
2000
1500
1000
500
0
Generatordrehzahl [rpm]
350
360
370
380
390
400
410
420
430
440
450
Zeit [s]

Figur 7d

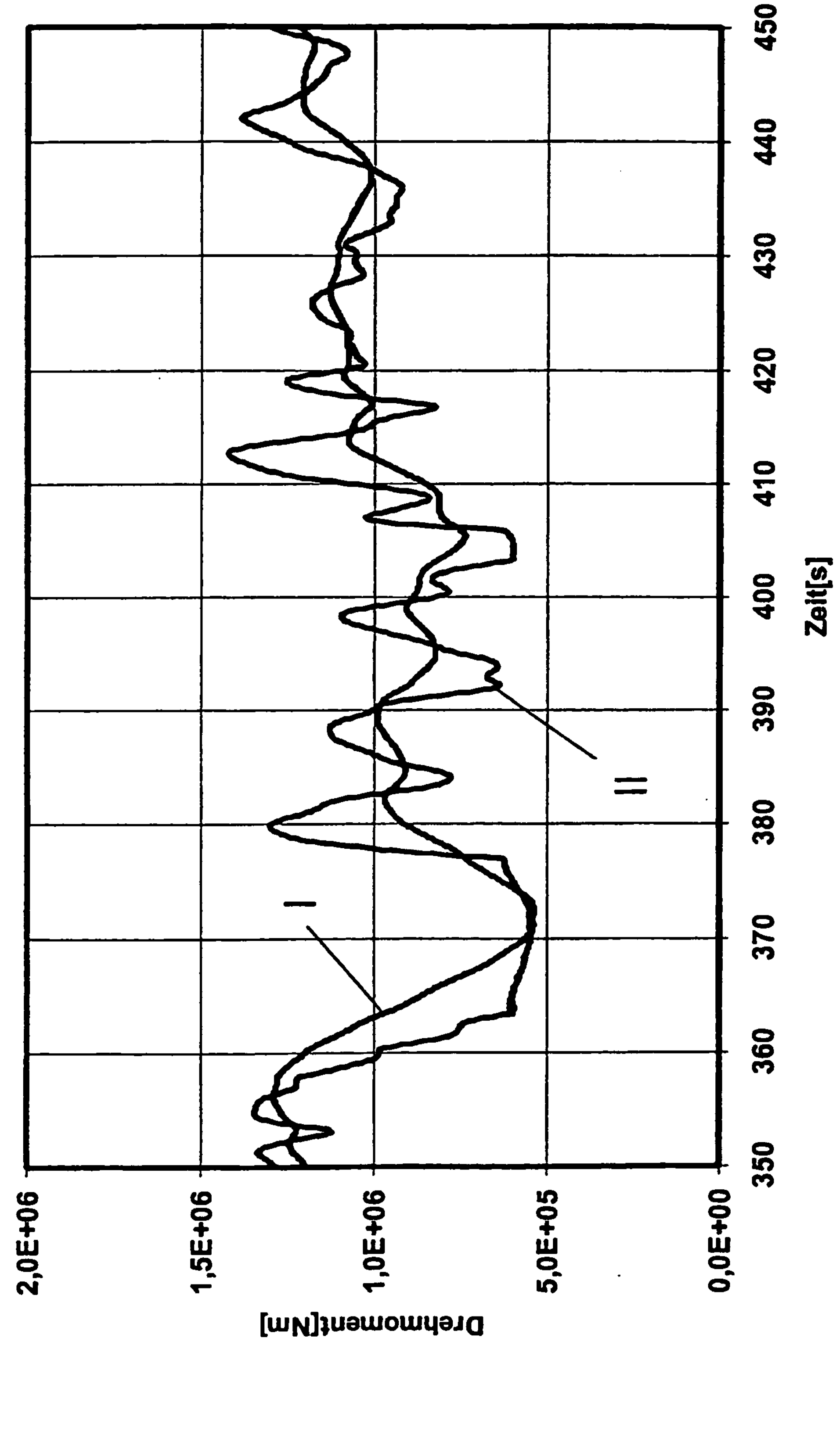
Drehmoment[Nm]
2,0E+06
1,5E+06
1,0E+06
5,0E+05
0,0E+00
350
360
370
380
390
400
410
420
430
440
450
Zeit[s]
I
II

Figur 8

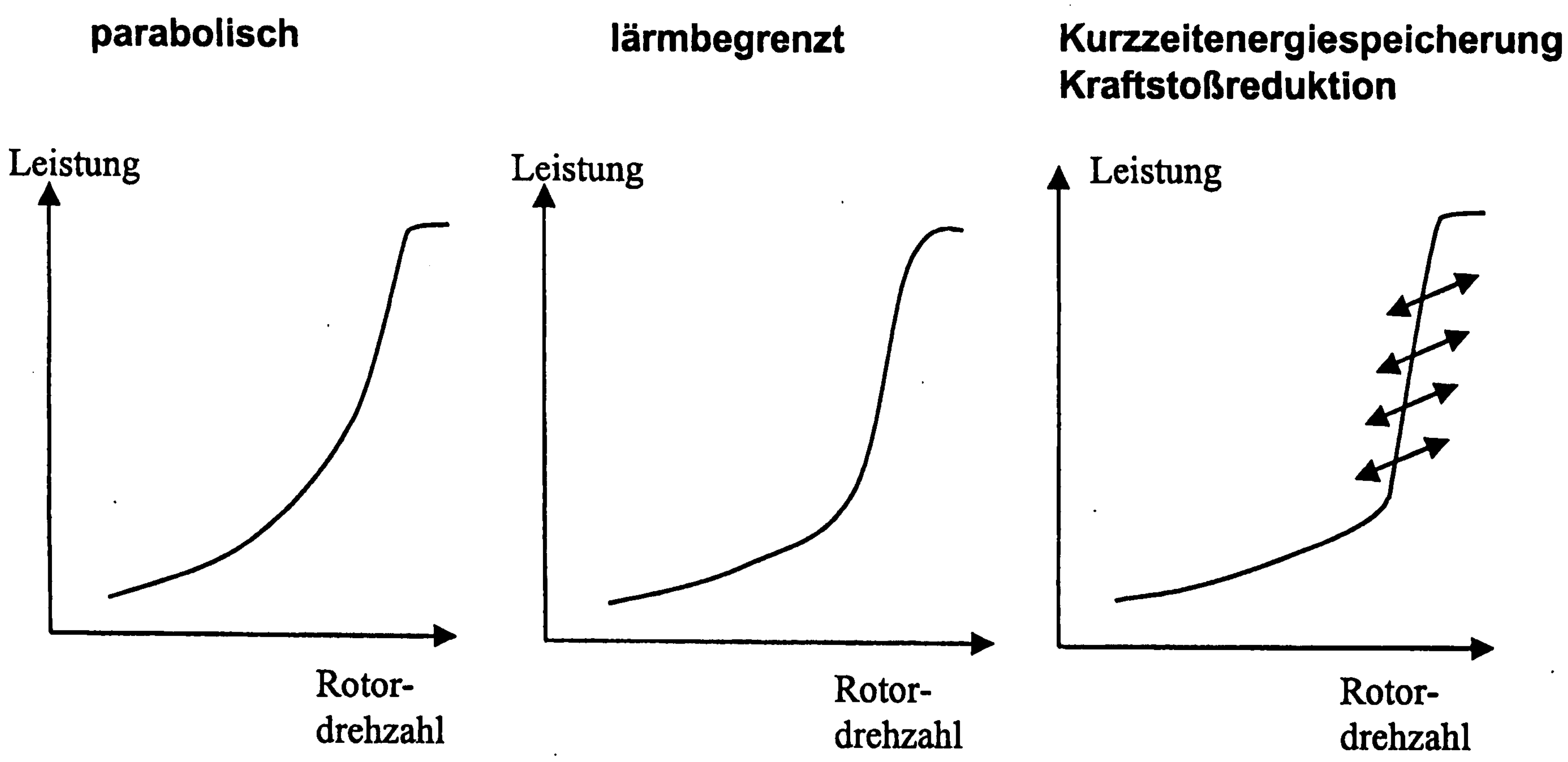
parabolisch
Leistung
Rotor-
drehzahl
lärmbegrenzt
Leistung
Rotor-
drehzahl
Kurzzeitenergiespeicherung
Kraftstoßreduktion
Leistung
Rotor-
drehzahl

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 8101444 A